# EUROPÄISCHE PATENTSCHRIFT

(11) **EP 1 186 085 B1**
(45) Veröffentlichungstag und Bekanntmachung des Hinweises auf die Patenterteilung: **22.04.2009**
(21) Anmeldenummer: 01921338.8
(22) Anmeldetag: 15.03.2001
(51) Int. Cl.: H02H 3/05

(54) **ELEKTROMOTORISCHER ANTRIEB**
ELECTROMOTIVE DRIVE
ENTRAINEMENT A MOTEUR ELECTRIQUE

(30) Priorität: 20.03.2000 DE 20005054 U
(43) Veröffentlichungstag der Anmeldung: 13.03.2002
(73) Patentinhaber: Dewert Antriebs- und Systemtechnik GmbH, 32278 Kirchlengern (DE)
(72) Erfinder: LAMBRECHT, Heinz, 32312 Lübbecke (DE); BOKÄMPER, Ralf, 32312 Lübbecke (DE)
(74) Vertreter: Specht, Peter
(86) Internationale Anmeldenummer: PCT/EP2001/002885
(87) Internationale Veröffentlichungsnummer: WO 2001/071875

(56) Entgegenhaltungen:
- EP-A- 0 468 361
- DE-U- 9 011 262
- US-A- 5 770 934
- US-A- 5 771 511

## Beschreibung

Die Erfindung betrifft einen elektromotorischen Antrieb, insbesondere einen Möbelantrieb mit einer von einem Handschalter betätigbaren, eine Steuerplatine enthaltenden Steuereinheit sowie mit einer Sicherheitseinheit oder mit einem Sicherheitsschaltkreis.

Der in Frage kommende elektromotorische Antrieb ist in vielen Ausführungen bekannt. Die jeweilige Ausführung richtet sich nach dem Verwendungszweck. Bekannt sind Antriebe mit einem Antriebsmotor und einem Abtriebsglied sowie sogenannten Doppelantrieben mit zwei Antriebsmotoren und zwei Abtriebsgliedern. Für den Einsatz im Möbelbereich sind die in Frage kommenden Antriebe Linearantriebe. Der Motor treibt über ein Untersetzungsgetriebe eine Spindel an, auf die eine Spindelmutter drehfest aufgesetzt ist, die ein Hubrohr oder ein ähnliches Bauteil trägt, welches an ein zu verstellendes Bauteil angeschlossen werden kann.

Die Entgegenhaltung US-A-5771511 zeigt einen elektromotorischen Möbelantrieb, mit einer von einem Handschalter betätigbaren, eine Steuerplatine enthaltende Steuereinheit sowie mit einer Sicherheitseinheit oder einem Sicherheitsschaltkreis, wobei die Steuereinheit mit wenigstens einem Sicherheitsbaustein und/oder einem Sicherheitsschaltkreis zur Selbstüberwachung und Ferndiagnose der Steuereinheit ausgestattet ist.

Da die Antriebe im häuslichen und medizinischen Bereich sowie im Pflegebereich eingesetzt werden, werden entsprechend einer Norm hohe Sicherheitsanforderungen gestellt.

Gemäß der erwähnten Norm für elektrische Geräte wird eine sog. Erstfehlersicherheit gefordert, d.h., wenn beispielsweise eine Funktion zum Abschalten nicht ausgelöst wird, muß trotzdem sichergestellt sein, daß der Abschaltvorgang durchgeführt wird, oder daß beispielsweise der Antrieb nicht eingeschaltet werden kann, wenn Fehler oder Schäden an elektrischen oder elektronischen Bauteilen vorliegen.

Der Erfindung liegt die Aufgabe zugrunde, einen elektromotorischen Antrieb der eingangs näher beschriebenen Art so zu gestalten, daß die durch die Elektrogerätenorm geforderte Erstfehlersicherheit erfüllt wird, so daß für einen Bediener oder für einen Benutzer keine Gefahr besteht, wenn durch Ausfall oder Defekt einer elektrischen oder elektronischen Komponente ein notwendiger Schaltvorgang nicht mehr ausgelöst werden kann, oder daß beim Ausfall eines elektrischen oder elektronischen Bauteils der elektromotorische Antrieb nicht in Betrieb gesetzt werden kann.

Die gestellte Aufgabe wird gemäß einem ersten Lösungsvorschlag gelöst, indem eine Funktionskontrolle der Sicherheitseinheit oder des Sicherheitsschaltkreises in der durch die Anzugs- oder Abfallverzögerung bedingten Zeit des jedem Motor zugeordneten Relais erfolgt. Gemäß einem zweiten Lösungsvorschlag ist vorgesehen, daß die Steuereinheit mit wenigstens einem Sicherheitsbaustein und/oder einem Sicherheitsschaltkreis zur Kontrolle der Steuereinheit derart ausgestattet ist, daß zwischen dem Betätigen eines Betätigungselementes des Handschalters und dem Anlauf des Motors oder der Motore eine Funktionskontrolle der Steuereinheit erfolgt. Durch die erfindungsgemäßen Gestaltungen kontrolliert sich die Steuereinheit selbst, so daß der Ausfall oder der Defekt von elektrischen oder elektronischen Bauteilen sofort erkannt wird. So kann beispielsweise die Funktion abgeschaltet werden, wenn sich die Kontakte eines Relais nicht mehr lösen. So kann beispielsweise durch einen vergleich eine Freigabe an alle Motoren erfolgen, wenn die Voraussetzungen für den Anlauf gegeben sind. Bei einer Fehlermeldung kann erreicht werden, daß alle Motoren abgeschaltet werden, wenn das Fehlersignal ein Freigabeschaltelement, vorzugsweise einen Transistor der Schaltlogik sperrt. Ist die Funktion sichergestellt, kann dies beispielsweise durch Aufleuchten eines optischen Anzeigeelementes, vorzugsweise einer Leuchtdiode im Handschalter oder an einer gut sichtbaren Stelle erfolgen. Dieses optische Anzeigeelement sollte dann vorzugsweise solange leuchten, wie das Betätigungselement gedrückt wird.

In weiterer Ausgestaltung ist noch vorgesehen, daß die Steuereinheit mit mehreren Sicherheitsbausteinen oder mehreren Sicherheitsschaltkreisen ausgestattet ist, in die die Fehlersignale einspeisbar sind. Dabei können die Sicherheitsbausteine bzw. die Sicherheitsschaltkreise so ausgelegt sein, daß jeder Sicherheitsbaustein bzw. jeder Sicherheitsschaltkreis für ganz bestimmte Fehlersignale ausgelegt ist. Damit der Benutzer sofort auf eine Fehlermeldung hingewiesen wird, ist vorgesehen, daß dann ein optisches und/oder ein akustisches Signal erzeugt wird.

Die Überbrückungszeit ist relativ kurz, so daß auch die Fehlermeldung (akustisch und/oder optisch) kurzzeitig ist. Das Verschwinden ist ein Zeichen dafür, daß der Überprüfungsvorgang abgeschlossen ist. Die kurzzeitige Fehlermeldung entsteht deswegen, weil nach Betätigung eines Betätigungselementes und vor dem Anziehen des zugeordneten Relais und dem danach anlaufenden Motor sowie nach dem Loslassen des Betätigungselementes und vor dem Abfallen des zugeordneten Relais und dem danach stillstehenden Motor ein bestimmtes Zeitintervall vergeht, in dem eine Fehlerbedingung erfüllt ist, die jedoch nach Ablauf dieses Zeitintervalls im Normalfall nicht mehr erfüllt ist. Die daraus resultierende kurzzeitig auftretende und wieder verschwindende Fehlermeldung kann als eine Art Funktionskontrolle angesehen werden.

Es kann in bestimmten Fällen passieren, daß dieses Zeitintervall so kurz ist, daß die akustischen und optischen Meldeeinrichtungen aufgrund ihrer eigenen Signalverarbeitungslaufzeiten zu langsam sind, um ein erkennbares Signal anzuzeigen. Zum Erhalt eines wahrnehmbaren akustischen und/oder optischen Signals wird mit geeigneten Mitteln eine Verlängerung der Anzugszeit und der Abfallzeit des Motorrelais so simuliert, daß die Meldeeinrichtung das oben beschriebene Signal zur Kontrolle während eines Zeitraumes ausgibt, der für die menschliche Wahrnehmung ausreichend ist. Es ist deshalb vorgesehen, daß mittels eines Verzögerungselementes vorzugsweise die Anzugszeit des jedem Motor zugeordneten Relais verlängerbar ist. In weiterer Ausgestaltung ist jedoch vorgesehen, daß die Anzugszeit und die Abfallzeit des jedem Motor zugeordneten Relais verlängert wird. Dieses Verzögerungselement ist vorzugsweise in der Steuerung, der Fehlersignalverarbeitung oder in der Meldeeinrichtung angeordnet. Es kann jedoch auch an anderer Stelle angeordnet werden.

### Anhand der beiliegenden Figur wird die Erfindung noch näher erläutert. Es zeigt:

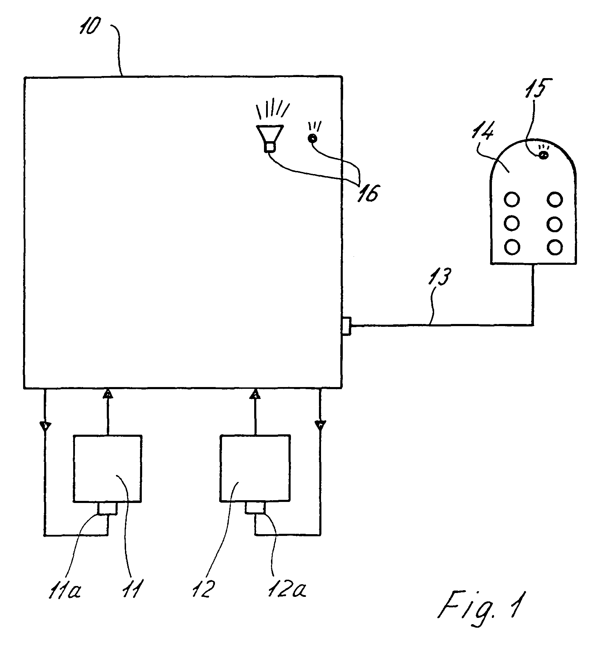

- Figur 1: die Steuereinheit eines erfindungsgemäßen elektromotorischen Antriebes als Blockschaltbild.

Die eine Steuerplatine enthaltende Steuereinheit 10 ist im dargestellten Ausführungsbeispiel mit zwei Sicherheitsbausteinen 11, 12 ausgestattet, die auch Schaltkreise sein könnten, die in der Steuerplatine der Steuereinheit 10 vorgesehen sind. Die Steuereinheit 10 ist über ein Steuerkabel 13 mit einem Handschalter 14 verbunden. Die Übertragung der vom Handschalter 14 ausgelösten Signale kann auch drahtlos erfolgen. Bei Betätigung eines der Betätigungselemente des Handschalters 14 werden zunächst vorzugsweise in der Verzögerungszeit der den Motoren zugeordneten Relais die Sicherheitsbausteine aktiviert, um die Funktionssicherheit zu prüfen. Im Falle eines Fehlers oder mehrerer Fehler werden Signale in die Eingängc 11a bzw. 12a der Sicherheitsbausteine 11, 12 eingespeist, so daß beispielsweise ein Anlaufen der Motore verhindert wird.

Wie die Figur 1 zeigt, kann der Handschalter 14 mit einer optischen Anzeige in Form einer Leuchtdiode 15 ausgestattet sein, die bei einem Fehler solange leuchtet, wie das entsprechende Betätigungselement des Handschalters 14 gedrückt ist. Ferner kann ein optisches oder akustisches Anzeigeelement 16 auch in der Steuereinheit 10 installiert sein. Entsprechend der Figur 1 kann ein optisches und akustisches Anzeigeelement verwendet werden. Es ist jedoch auch möglich, daß nur eines der beiden Anzeigeelemente zum Einsatz kommt.

In nicht näher dargestellter Weise kann an einer geeigneten Stelle, zweckmäßigerweise jedoch in der Steuerung oder der Fehlersignalverarbeitung oder in der Meldecinrichtung ein Verzögerugselement eingesetzt werden, um beispielsweise die Anzugszeit und die Abfallzeit des jeden Motor zugeordneten Relais zu verlängern, damit während dieser Zeit die Funktionskontrolle auch durchgeführt werden kann.

Die Erfindung ist nicht auf das darstellte Ausführungsbeispiel beschränkt. Wesentlich ist die sinngemäße Selbstkontrolle der Steuereinheit, damit die Erstfehlersicherheit gewährleistet ist.

## Patentansprüche

1. Elektromotorischer Antrieb, insbesondere Möbelantrieb, mit einer von einem Handschalter (14) betätigbaren, eine Steuerplatine enthaltende Steuereinheit (10) sowie mit einer Sicherheitseinheit oder einem Sicherheitsschaltkreis, **dadurch gekennzeichnet, daß** eine Funktionskontrolle der Sicherheitseinheit oder des Sicherheitsschaltkreises in der durch die Anzugs- oder Abfallverzögerung bedingten Zeit des jedem Motor zugeordneten Relais erfolgt.

2. Elektromotorischer Antrieb, insbesondere Möbelantrieb, mit einer von einem Handschalter (14) betätigbaren, eine Steuerplatine enthaltende Steuereinheit (10), sowie mit einer Sicherheitseinheit oder einem Sicherheitsschaltkreis, wobei die Steuereinheit (10) mit wenigstens einem Sicherheitsbaustein (11, 12) und/oder einem Sicherheitsschaltkreis zur Kontrolle der Steuereinheit (10) ausgestattet ist, **dadurch gekennzeichnet, daß** zwischen dem Betätigen eines Betätigungselementes des Handschalters (14) und dem Anlauf des Motors oder der Motore eine Funktionskontrolle der Steuereinheit (10) erfolgt.

3. Elektromotorischer Antrieb nach Anspruch 1 oder 2, **dadurch gekennzeichnet, daß** die Steuereinheit (10) mit mehreren Sicherheitsbausteinen (11,12) oder mehreren Sicherheitsschaltkreisen ausgestattet ist, in die Fehlersignale einspeisbar sind.

4. Elektromotorischer Antrieb nach Anspruch 3, **dadurch gekennzeichnet, daß** jeder Sicherheitsbaustein für vorbestimmte, unterschiedliche Fehlersignale ausgerüstet ist.

5. Elektromotorischer Antrieb nach einem oder mehreren der vorhergehenden Ansprüche 1 bis 4, **dadurch gekennzeichnet, daß** bei einer Fehlermeldung ein optisches und/oder akustisches Signal (15,16) erzeugbar ist.

6. Elektromotorischer Antrieb nach einem oder mehreren der vorhergehenden Ansprüche 1 bis 5, **dadurch gekennzeichnet, daß** mittels eines Verzögerungselementes vorzugsweise die Anzugszeit des jeden Motor zugeordneten Relais verlängerbar ist.

7. Elektromotorischer Antrieb nach Anspruch 6, **dadurch gekennzeichnet, daß** die Anzugszeit und die Abfallzeit des jeden Motor zugeordneten Relais verlängerbar ist.

8. Elektromotorischer Antrieb nach einem oder mehreren der vorhergehenden Ansprüche 1 bis 7, **dadurch gekennzeichnet, daß** das Verzögerungselement vorzugsweise in der Steuerung oder in der Fehlersignalverarbeitung oder in der Meldeeinrichtung angeordnet ist.

## Claims

1. Electromotive drive, in particular furniture drive, having a control unit (10) which can be operated by a hand-operated switch (14) and contains a control printed circuit board, and having a safety unit or a safety circuit, **characterized in that** the functioning of the safety unit or of the safety circuit is controlled during the time which is required for the delayed activation or deactivation of the relay which is associated with each motor.

2. Electromotive drive, in particular furniture drive, having a control unit (10) which can be operated by a hand-operated switch (14) and contains a control printed circuit board, and having a safety unit or a safety circuit, with the control unit (10) being equipped with at least one safety module (11, 12) and/or a safety circuit for controlling the control unit (10), **characterized in that** the functioning of the control unit (10) is controlled between operation of an operating element of the hand-operated switch (14) and start-up of the motor or the motors.

3. Electromotive drive according to Claim 1 or 2, **characterized in that** the control unit (10) is equipped with a plurality of safety modules (11, 12) or a plurality of safety circuits into which fault signals can be fed.

4. Electromotive drive according to Claim 3,
**characterized in that** each safety module is equipped for predetermined, different fault signals.

5. Electromotive drive according to one or more of the preceding Claims 1 to 4, **characterized in that** an optical and/or acoustic signal (15, 16) can be generated when a fault is signalled.

6. Electromotive drive according to one or more of the preceding Claims 1 to 5, **characterized in that** preferably the activation time of the relay which is associated with each motor can be extended by means of a delay element.

7. Electromotive drive according to Claim 6,
**characterized in that** the activation time and the deactivation time of the relay which is associated with each motor can be extended.

8. Electromotive drive according to one or more of the preceding Claims 1 to 7, **characterized in that** the delay element is preferably arranged in the control system or in the fault signal processing system or in the signalling device.

## Revendications

1. Entraînement à moteur électrique, en particulier entraînement pour meubles, avec une unité de commande (10) actionnable par un commutateur manuel (14), contenant une carte de commande ainsi qu'avec une unité de sécurité ou un circuit de commutation de sécurité, **caractérisé en ce qu'**un contrôle du fonctionnement de l'unité de sécurité ou du circuit de commutation de sécurité est effectué dans le temps dû au retard d'actionnement ou de déclenchement de chaque relais associé au moteur.

2. Entraînement à moteur électrique, en particulier entraînement pour meubles, avec une unité de commande (10) actionnable par un commutateur manuel (14), contenant une carte de commande ainsi qu'avec une unité de sécurité ou un circuit de commutation de sécurité, dans lequel l'unité de commande (10) est équipée d'au moins un module de sécurité (11, 12) et/ou d'un circuit de commutation de sécurité pour le contrôle de l'unité de commande (10), **caractérisé en ce qu'**entre l'actionnement d'un élément d'actionnement du commutateur manuel (14) et le démarrage du moteur ou des moteurs est effectué un contrôle du fonctionnement de l'unité de commande (10).

3. Entraînement à moteur électrique selon la revendication 1 ou 2, **caractérisé en ce que** l'unité de commande (10) est équipée de plusieurs modules de sécurité (11, 12) ou de plusieurs circuits de commutation de sécurité, dans lesquels des signaux d'erreur peuvent être introduits.

4. Entraînement à moteur électrique selon la revendication 3, **caractérisé en ce que** chaque module de sécurité est équipé pour différents signaux d'erreur prédéterminés.

5. Entraînement à moteur électrique selon l'une ou plusieurs quelconques des revendications précédentes 1 à 4, **caractérisé en ce qu'**en cas de message d'erreur, un signal optique et/ou acoustique (15, 16) peut être généré.

6. Entraînement à moteur électrique selon l'une ou plusieurs quelconques des revendications précédentes 1 à 5, **caractérisé en ce qu'**au moyen d'un élément de retard, de préférence le temps d'actionnement du relais associé à chaque moteur peut être prolongé.

7. Entraînement à moteur électrique selon la revendication 6, **caractérisé en ce que** le temps d'actionnement et le temps de déclenchement du relais associé à chaque moteur peuvent être prolongés.

8. Entraînement à moteur électrique selon l'une ou plusieurs quelconques des revendications précédentes 1 à 7, **caractérisé en ce que** l'élément de retard est disposé de préférence dans la commande ou dans le traitement de signaux d'erreur ou dans le dispositif de signalisation.
